Europäisches Patentamt

(19) European Patent Office

Office européen des brevets

(11) Numéro de publication : **0 101 393**
**B1**

(12) ·FASCICULE DE BREVET EUROPÉEN

(45) Date de publication du fascicule du brevet :
28.05.86

(51) Int. Cl.⁴ : **B 62 H   3/10**

(21) Numéro de dépôt : **83420134.5**

(22) Date de dépôt : **22.07.83**

(54) Appareil pour la présentation et/ou le stockage de bicyclettes ou véhicules similaires.

(30) Priorité : 26.07.82 FR 8213294

(43) Date de publication de la demande :
22.02.84 Bulletin 84/08

(45) Mention de la délivrance du brevet :
28.05.86 Bulletin 86/22

(84) Etats contractants désignés :
**BE CH DE GB IT LI NL**

(56) Documents cités :
**FR-A- 2 377 317**
**FR-A- 2 466 226**
**FR-A- 2 486 903**
**US-A- 2 803 349**
**US-A- 3 785 500**
**US-A- 3 907 113**

(73) Titulaire : **Fiol, James**
**rue Jules Ferrier**
**F-42140 Chazelles-sur-Lyon (FR)**

(72) Inventeur : **Fiol, James**
**rue Jules Ferrier**
**F-42140 Chazelles-sur-Lyon (FR)**

(74) Mandataire : **Dupuis, François**
**Cabinet Charras 3 Place de l'Hôtel-de-Ville**
**F-42000 St.Etienne (FR)**

Jouve, 18, rue St-Denis, 75001 Paris, France

## Description

L'invention concerne un appareil pour la présentation et/ou le stockage de bicyclettes ou véhicules similaires.

On connaît déjà des supports présentoirs adaptables aux bicyclettes en vue de leur exposition en magasin ou leur stockage en garage et atelier. Généralement ces supports présentent une embase d'appui au sol surmontée d'un élément vertical conformé pour maintenir la bicyclette notamment au moyen de la manivelle qui est engagée dans une rainure dudit élément vertical. Il apparaît que l'engagement de la manivelle dans l'élément vertical support n'est pas toujours très aisé car on doit nécessairement, à la fois, soulever la bicyclette et maintenir positionnée verticalement la dite manivelle. De même, il se produit des efforts et sollicitations anormaux au niveau du boîtier de pédalier puisque la bicyclette est maintenue pour une seule manivelle, en porte à faux, qui encaisse tout le poids de ladite bicyclette.

Enfin, ce type de support est conformé pour recevoir une seule bicyclette.

D'autres présentoirs sont susceptibles de recevoir plusieurs bicyclettes, mais dans ce cas, ils présentent une ossature support rigide qui est encombrante limitant leur emploi.

On connaît en particulier le brevet US-A-3 785 500 qui décrit un appareil pour le stockage de bicyclettes et véhicules selon le préambule de la revendication 1. Il s'agit en fait d'un ratelier permettant le garage d'une pluralité de bicyclettes, celles-ci étant maintenues par l'une des roues et généralement la roue avant dans des éléments supports agencés de manière appropriée pour assurer cette fonction de maintien. Dans ce cas les éléments supports et de maintien des roues peuvent être amovibles avec une ossature d'appui avec une capacité de pivotement angulaire. Ils sont disposés alternativement par rapport à l'axe central du ratelier.

Selon cette disposition et réalisation, l'encombrement de l'appareil est maximum et d'une utilisation très limitée, on le retrouve notamment dans les cours d'usines pour le personnel venant travailler avec comme moyen de locomotion une bicyclette.

Tout autre est l'objet de l'invention qui offre une fonction nouvelle de présentation de bicyclettes et qui remédie aux inconvénients de l'art antérieur.

L'invention, telle qu'elle est caractérisée dans les revendications, résout le problème consistant à créer un appareil pour la présentation et/ou le stockage de bicyclettes d'une conception simplifiée et fonctionnelle lui permettant la présentation ou le rangement de plusieurs bicyclettes selon des positions variées, ledit appareil étant en outre particulièrement bien adapté pour être stocké et transporté.

Dans ce but l'appareil pour la présentation et/ou le stockage de plusieurs bicyclettes ou véhicules similaires du type comprenant au moins deux supports (1) conformés et agencés pour maintenir verticalement les bicyclettes ; les supports (1) étant susceptibles de coopérer librement à chaque extrémité, en étant amovibles, avec une ossature (0) comprenant au moins deux éléments d'appui au sol (2, 3) démontables, horizontaux et opposés, parallèles et conformés en combinaison avec les supports (1) pour que l'ossature puisse être repliée, lesdits éléments d'appui au sol (2, 3) étant conformés pour recevoir, d'une manière perpendiculaire et démontable les supports (1) avec possibilité de pivotement angulaire, est caractérisé en ce que plusieurs montants verticaux (2a, 4, 3a, 5) de hauteurs différentes pris deux à deux sont fixés aux éléments d'appui au sol (2, 3) et que chacun desdits supports (1) d'une part est réalisé d'une barre droite, dont les extrémités sont reliées aux bouts desdits montants verticaux (2a, 4, 3a, 5), en ménageant ladite possibilité de pivotement angulaire, et d'autre part présente à ses extrémités des éléments (6, 7) de positionnement et de centrage de deux roues d'une bicyclette.

L'invention est exposée ci-après plus en détail à l'aide des dessins représentant des modes d'exécution.

La figure 1 est une vue en perspective de l'appareil conformément à l'invention dont les divers éléments constitutifs sont représentés, d'une manière séparée, en alignement de montage.

La figure 2 représente une vue en perspective correspondant à la figure 1, mais après montage des différents éléments.

La figure 3 représente une vue en perspective montrant un exemple de pliage de l'appareil.

La figure 4 représente une vue en coupe considérée selon la ligne 4-4 de la figure 2 montrant le positionnement d'une bicyclette.

La figure 5 représente, à une échelle plus importante, une vue partielle en coupe considérée selon la ligne 5-5 de la figure 4.

La figure 6 représente, à une échelle plus importante, une vue partielle en coupe considérée selon la ligne 6-6 de la figure 4.

La figure 7 représente, à une échelle plus importante, une vue en perspective d'une partie de l'élément support de bicyclette.

La figure 8 représente une vue en variante de l'élément support qui s'adapte sous les bases du cadre.

La figure 9 est une vue d'une autre variante de l'élément support qui s'adapte sous les bases du cadre.

Conformément à la présente invention, l'appareil comprend essentiellement au moins un élément support (1), agencé pour maintenir positionné verticalement une bicyclette (B), et une ossature d'appui au sol, désignée dans son ensemble par (0).

Selon une première caractéristique, l'ossature (0) est exécutée en plusieurs éléments indépendants conformés pour être simplement emboîtés les uns par rapport aux autres en vue de constituer à la fois une ossature très facilement démontable et repliable en étant susceptible d'occuper des positions angulaires variées. Chacun des éléments constitutifs est réalisé au moyen de tubes.

A cet effet, l'ossature (0) comprend au moins deux éléments (2 et 3) d'appui au sol de section transversale creuse et carrée notamment. Chaque élément (2 et 3) présente en débordement, d'une manière perpendiculaire, au moins un, mais généralement plusieurs, embouts verticaux (2a et 3a) qui permettent l'emboîtement et le centrage d'éléments verticaux (4 et 5) de section complémentaire. D'une manière préférée, quoique non rigoureusement limitative, les éléments (2 et 3) présentent des embouts d'extrémité (2a1) et (3a1), et un ou plusieurs embouts intermédiaires (2a-3a). On souligne que les embouts d'extrémité (2a1-3a1) font également office de piècement en débordant de la face de dessous des éléments (2 et 3). Chaque embout est de section creuse et carrée notamment.

Suivant une autre caractéristique, les extrémités des éléments support (1) de bicyclette sont agencées pour être emboîtées et positionnées soit dans les éléments verticaux (4 et 5) soit directement dans les embouts (2a-3a) de deux éléments opposés et parallèles (2 et 3). L'on conçoit donc que les supports (1) font office d'entretoise à l'ensemble de l'ossature.

Dans ce but, chaque support (1) présente en débordement de la face de dessous d'un élément tubulaire (1a) de section carrée, des doigts ou pions de centrage (1b) de section ronde, destinés à être engagés librement dans la section creuse des éléments (4-5) ou des embouts (2a-3a) avec capacité de pivotement angulaire.

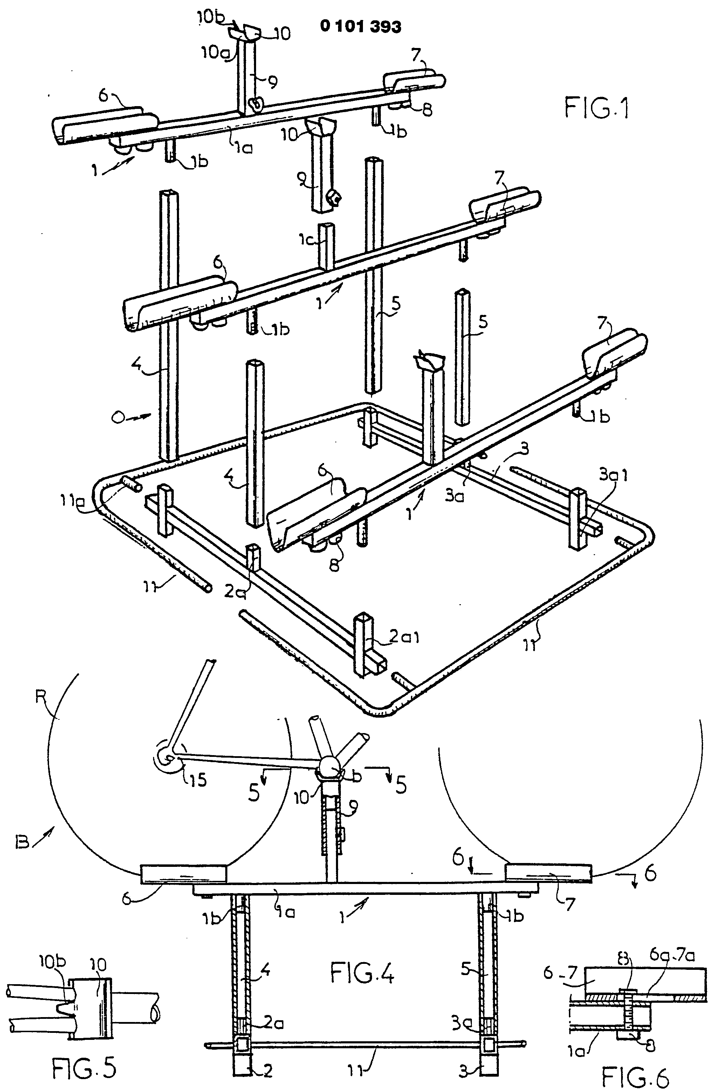

L'élément tubulaire (1a) présente à chacune de ses extrémités des profilés d'appui (6 et 7) conformés pour autoriser, d'une manière connue, le positionnement et le centrage des roues (R) de la bicyclette (B). Chaque profilé (6 et 7) est fixé en bout de l'élément (1a) d'une manière réglable en longueur pour faire varier l'écartement entre deux profilés opposés en vue de pallier aux différences dimensionnelles des bicyclettes. Par exemple, les profilés (6 et 7) sont fixés par vis (8) engagées librement dans une lumière (6a — 7a) ou différents trous établis dans le fond desdits profilés (6 et 7) (figure 6).

La face de dessus de l'élément (1a) recevant les profilés d'appui (6 et 7), est en outre équipée entre les dits profilés, d'un embout vertical (1c) fixé par soudure ou autrement, en débordement dudit élément (1a). Cet embout (1c), de section carrée, reçoit à libre coulissement une tige creuse (9) réglable en hauteur pour pallier aux différentes dimensions de bicyclettes et conformée pour permettre le positionnement et le maintien de la bicyclette en combinaison notamment avec les profilés d'appui (6 et 7).

A cet effet, et selon une première variante, l'extrémité supérieure de la tige (9) présente transversalement un berceau d'appui (10) dont la section permet l'appui et le centrage en position du boîtier de pédalier (b) (figure 4). Par exemple, ce berceau (10) est de section transversale en U dont les ailes (10a) de faible hauteur, sont très légèrement écartées (figure 1). De plus, l'une de ces ailes présente directement ou d'une manière rapportée, sensiblement dans sa partie médiane, un doigt d'indexation (10b) destiné à être engagé entre les haubans du cadre de la bicyclette (figure 5) pour assurer ainsi le positionnement angulaire de ladite bicyclette (B).

La bicyclette est donc maintenue positionnée verticalement sur le support (1) par trois points : les deux profilés d'appui (7 et 8) dans lesquels sont centrées les roues (R) et le berceau (10) du bras vertical (9) pour l'appui et le centrage du boîtier de pédalier en combinaison avec les haubans.

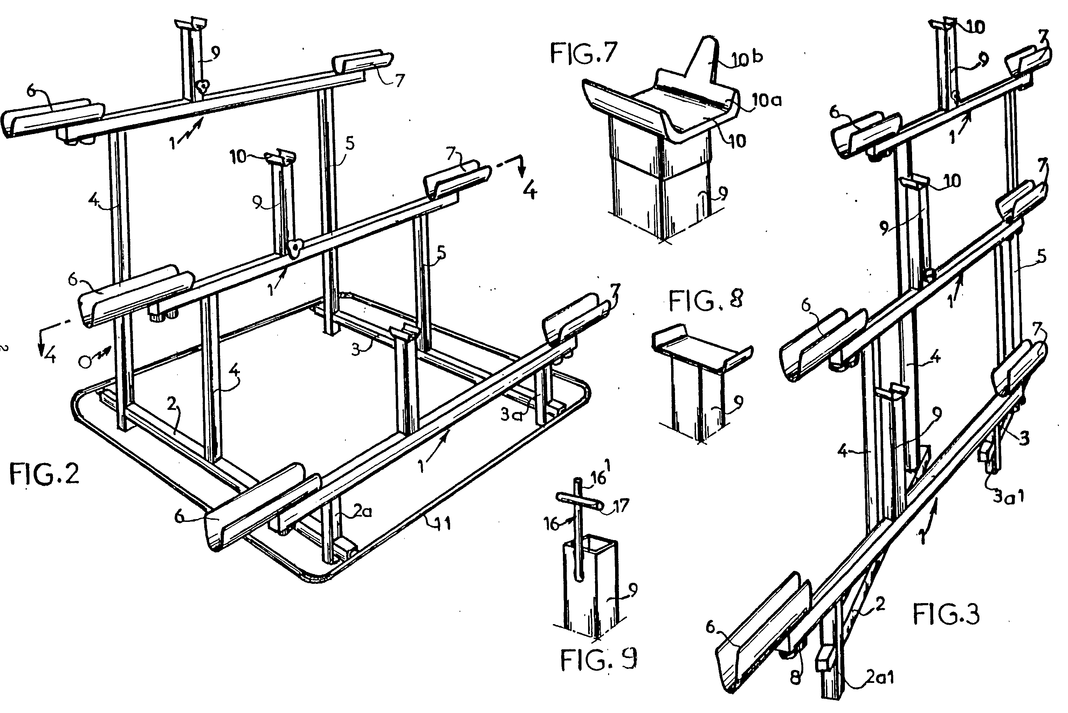

Selon une autre variante illustrée figure 8, l'extrémité supérieure de la tige (9) présente également un berceau d'appui (14) dont la section permet l'appui et le centrage en position des bases du cadre de bicyclette, lesdites bases sensiblement horizontales assurant la liaison entre le boîtier du pédalier et la patte arrière (15) du cadre sur laquelle est monté l'axe de roue arrière. Ce berceau présente sa section ouverte dans l'axe de la barre support (1).

Selon la variante de la figure 9, l'extrémité supérieure de la tige (9), présente directement ou par une pièce rapportée un prolongement vertical (16) sous la forme d'un axe et une barre horizontale (17) disposée en croix par rapport audit axe, l'ensemble formant berceau d'appui des bases du cadre de bicyclettes. Celles-ci viennent en appui sur les extrémités de la barre horizontale de part et d'autre de l'extrémité libre supérieure (16') du prolongement vertical assurant ainsi une limitation de positionnement transversal de la bicyclette.

Le montage de l'appareil présentoir selon l'invention est particulièrement aisé, de même que le positionnement de la ou des bicyclettes. Il suffit en effet d'entretoiser, par simple emboîtement, les éléments d'appui au sol (2 et 3) au moyen des éléments supports (1) que l'on engage dans les embouts (2a — 3a) et/ou dans les éléments verticaux (4 et 5) préalablement emboîtés dans lesdits embouts. On souligne que les éléments verticaux (4 et 5) sont de hauteur différente deux à deux pour obtenir une présentation étagée des bicyclettes (figures 1 et 2).

Concernant le positionnement proprement dit des bicyclettes, il suffit de les soulever et de les mettre en simple appui sur les profilés (7 et 8) par les roues (R) et sur le berceau (10) que l'on baisse ou soulève par glissement pour l'adapter parfaitement sous le boîtier de pédalier (b) (figure 4).

D'une manière particulièrement avantageuse, on souligne que l'ossature est déformable angulairement de sorte que les éléments d'appui au sol (2 et 3), surmontés ou non des éléments verticaux (4 et 5) peuvent occuper des positions angulaires variées par rapport aux éléments support (1). Cela offre un double avantage. En effet, il est possible de décaler angulairement la présentation des bicyclettes pour une meilleure mise en valeur et une présentation en espace réduit avec pédales démontées et guidon tourné, et de replier en quasi-totalité l'ensemble de l'appareil pour son stockage et/ou son transport (figure 3), lorsque la ou les bicyclettes sont enlevées.

Cette articulation des éléments d'appui au sol (2) s'effectue au moyen des pions de centrage (1b) qui sont engagés librement dans la section creuse des montants (4 et 5) et/ou des embouts (2a — 3a) des éléments d'appui au sol (2 — 3).

Suivant une autre caractéristique de l'invention, on prévoit de rendre réglables linéairement les éléments supports (1), de façon à permettre la présentation de bicyclettes de dimension variable en longueur, telles que tandems.

Par exemple, l'élément tubulaire (1a) du support (1) peut être réalisé en plusieurs parties télescopiques susceptibles d'être développées en longueur. De même, l'élément tubulaire (1a) en une ou plusieurs parties peut être équipé de plusieurs bras verticaux d'appui et de centrage du boîtier de pédalier pour, par exemple, la présentation de tandems.

Comme le montrent notamment les figures 1 et 2, les éléments d'appui au sol (2 et 3) peuvent recevoir en bout, ou sur leur longueur à des endroits appropriés, d'une manière démontable un ou des profilés tubulaires (11) conformés pour assurer une protection périphérique à la base de l'appareil. Chaque profilé (11) présente par exemple des embouts (11a) susceptibles d'être engagés et centrés dans la section creuse des éléments d'appui au sol (2 et 3).

Il est bien évident que l'appareil selon l'invention peut être exécuté en toutes dimensions et matière, les éléments d'appui au sol (2-3) pouvant être agencés et dimensionnés de façon à recevoir un nombre quelconque de porte-vélos (1) avec ou non les montants (4 et 5) de surélévation.

Les avantages ressortent bien de la description, en particulier on souligne :

Le caractère démontable de l'ensemble.

L'articulation de l'ossature pour s'adapter à l'espace en permettant une présentation variée des bicyclettes, et un encombrement réduit pour le stockage et/ou le transport en l'absence de bicyclette.

Aucune pièce intermédiaire d'assemblage n'est nécessaire pour le montage de l'appareil.

Le bon positionnement de la ou des bicyclettes qui ne subissent aucune contrainte.

La facilité de présentation.

La possibilité de présenter plusieurs bicyclettes.

Enfin, on souligne que l'ossature, telle que définie, peut permettre le montage d'un panneau publicitaire qui coopèrerait par exemple à l'arrière des éléments d'appui au sol (2-3).

## Revendications

1. Appareil pour la présentation et/ou le stockage de plusieurs bicyclettes ou véhicules similaires, comprenant au moins deux supports (1) conformés et agencés pour maintenir verticalement les bicyclettes ; les supports (1) étant susceptibles de coopérer librement à chaque extrémité, en étant amovibles, avec une ossature (0) comprenant au moins deux éléments d'appui au sol (2, 3) démontables, horizontaux, opposés, parallèles et conformés en combinaison avec les supports (1) pour que l'ossature puisse être repliée, lesdits éléments d'appui au sol (2, 3) étant conformés pour recevoir, d'une manière perpendiculaire et démontable les supports (1) avec possibilité de pivotement angulaire, caractérisé en ce que plusieurs montants verticaux (2a, 4, 3a, 5) de hauteurs différentes pris deux à deux sont fixés aux éléments d'appui au sol (2, 3), et que chacun desdits supports (1) d'une part est réalisé d'une barre droite, dont les extrémités sont reliées aux bouts desdits montants verticaux (2a, 4, 3a, 5), en ménageant ladite possibilité de pivotement angulaire, et d'autre part présente à ses extrémités des éléments (6, 7) de positionnement et de centrage des deux roues d'une bicyclette.

2. Appareil selon la revendication 1, caractérisé en ce que chaque élément (2-3) présente en débordement, d'une manière perpendiculaire, au moins un, mais généralement plusieurs embouts verticaux (2a-3a) qui permettent indifféremment l'emboîtement et le centrage des montants (4-5) ou le libre engagement des supports (1) de bicyclettes.

3. Appareil selon l'une quelconque des revendications 1 et 2, caractérisé en ce que les éléments (2-3), les embouts (2a-3a) et les montants (4-5) sont tubulaires de section carrée ou sensiblement notamment.

4. Appareil selon l'une quelconque des revendications 1 à 3, caractérisé en ce que chaque support (1) présente en débordement de la face de dessous d'un élément tubulaire (1a) des doigts ou pions de centrage (1b) de section ronde, destinés à être engagés librement dans la section creuse des couples de montants (4-5) ou des embouts (2a-3a).

5. Appareil selon l'une quelconque des revendications 1 à 4, caractérisé en ce que l'élément tubulaire (1a) du support (1) présente à chacune de ses extrémités, d'une manière réglable, des profilés d'appui (6 et 7) pour le positionnement et le centrage des roues de la bicyclette, et au moins un bras vertical (9) réglable en hauteur dont l'extrémité libre est agencée pour autoriser l'appui et le centrage de la partie inférieure du cadre.

6. Appareil selon la revendication 5, caractérisé en ce que le bras (9) présente transversalement en bout un berceau d'appui (1d) pour le centrage du boîtier de pédalier, l'une des ailes dudit berceau présentant un doigt d'indexation (10b) destiné à être engagé entre les haubans du cadre de la bicyclette en vue de son positionnement angulaire.

7. Appareil selon la revendication 5, caractérisé en ce que le bras (9) présente transversalement en bout un berceau d'appui (14) dont la section permet l'appui et le centrage en position des bases du cadre.

8. Appareil selon la revendication 5, caractérisé en ce que le bras (9) présente un prolongement vertical (16) sous forme d'un axe et une barre horizontale (17) en croix, les bases du cadre venant en appui sur les extrémités de la barre horizontale de part et d'autre de l'extrémité libre supérieure (16') du prolongement vertical.

9. Appareil selon l'une quelconque des revendications 1 à 8, caractérisé en ce que les montants (4 et 5) sont de hauteur différente deux à deux pour obtenir une présentation étagée des bicyclettes.

10. Appareil selon la revendication 5, caractérisé en ce que l'élément tubulaire (1a) du support (I) est réglable linéairement en étant réalisé en plusieurs parties télescopiques.

11. Appareil selon l'une quelconque des revendications 1 à 10, caractérisé en ce que les éléments d'appui au sol (2-3) reçoivent en bout, ou sur leur longueur, d'une manière démontable, un ou des profilés tubulaires (11) conformés pour assurer une protection périphérique à la base de l'appareil.


## Claims

1. Device for the display and/or the storage of a plurality of bicycles or like vehicles, including at least two supports (1) contoured and arranged for holding the bicycles vertically, the supports (1) being capable of co-operating freely at each end while being detachable with a framework (0) comprising at least two ground abutting elements (2, 3) which can be taken down and are horizontal, opposite, parallel and arranged in combination with the supports (1) to permit the framework to be folded up, said ground abutting elements (2, 3) being contoured for receiving in a perpendicular and detachable manner the supports (1) with the possibility of a pivotal angular swivelling, said device being characterized in that a plurality of vertical posts (2a, 4, 3a, 5) of different heights two by two are secured to the ground abutting elements (2, 3), and that each one of said supports (1), on the one hand, is made of a straight bar the ends of which are connected to the ends of said vertical posts (2a, 4, 3a, 5) while preserving the possibility of said angular swivelling, and on the other hand is provided at the ends thereof with the elements (6, 7) for positioning and centering the two wheels of a bicycle.

2. Device as set forth in claim 1, characterized in that each element (2-3) is provided in a projecting and perpendicular manner with at least one, but generally several vertical ferrules (2a-3a) permitting at will the encasing and the centering of the posts (4-5) or the free engagement of the bicycle supports (1).

3. Device as set forth in any one of claims 1 and 2, characterized in that the elements (2-3), the ferrules (2a-3a) and the posts (4-5) are tubular and more particularly square or approximately square in cross section.

4. Device as set forth in any one of claims 1-3, characterized in that each support (1) is provided with centering fingers or pieces (1b) of rounded section projecting from the underside of a tubular element (1a) for being engaged freely within the hollow section of the pairs of posts (4-5) or of the ferrules (2a-3a).

5. Device as set forth in any one of claims 1-4, characterized in that the tubular element (1a) of the support (1) is provided, at each one of the ends thereof, in an adjustable manner, with abutting profiles (6 and 7) for the positioning and the centering of the wheels of the bicycle, and with at least one vertically adjustable vertical arm (9) the free end of which is arranged for permitting the abutment and the centering of the lower portion of the frame.

6. Device as set forth in claim 5, characterized in that the arm (9) is provided transversely at the end thereof with an abutment cradle (14) for the centering of the crank case, one of the webs of said cradle being provided with an indexing finger (10b) intended for being engaged between the stays of the frame of the bicycle for the angular positioning thereof.

7. Device as set forth in claim 5, characterized in that the arm (9) is provided transversely at the end thereof with an abutment cradle (14) the section of which permits the abutment and the centering in position of the bases of the frame.

8. Device as set forth in claim 5, characterized in that the arm (9) is provided with a vertical extension (16) in the form of a pin and with a horizontal bar (17) in the form of a cross, the bases of the frame being abutted on the ends of the horizontal bar on either side of the upper free end (16') of the vertical extension.

9. Device as set forth in any one of claims 1-8, characterized in that the posts (4 and 5) have a different height two by two in order to obtain a staggered display of the bicycles.

10. Device as set forth in claim 5, characterized in that the tubular element (1a) of the support (1) is adjustable linearly, being made of a plurality of telescopic portions.

11. Device as set forth in any one of claims 1 to 10, characterized in that the ground abutting elements (2-3) receive at the end thereof, or along their length, in a detachable manner, one or more tubular profiles (11) contoured to provide a peripheral protection at the base of the device.


## Patentansprüche

1. Vorrichtung zum Präsentieren und/oder zur Aufstellung einer gewissen Menge von Fahrrädern oder ähnlichen Fahrzeugen, die am wenigstens zwei für das Halten der Fahrräder in Vertikalstellung ausgestalteten und eingerichteten Träger (1) aufweist, die abnehmbar sind und am jeden einen Ende mit einem Gerüst (0) frei zusammenwirken können, das am wenigstens aus zwei zerlegbaren, waagrechten, entgegengesetzten gleichlaufenden, auf der Grundfläche abgestüzten Elementen (2, 3) besteht, die in Kombination mit den Trägern (1) zum Zusammenfalten des Gerüsts ausgestaltet sind, wobei die besagten, auf der Grundfläche abgestützten Elemente (2, 3) zur Aufnahme in einer senkrechten und zerlegbarer weise mit der Möglichkeit einer winkeligen Verschwenkung der Träger (1) gebildet werden, dadurch gekennzeichnet, dass mehrere, je zu zwei von unterschiedlicher Höhe senkrechte Ständer (2a, 4, 3a, 5) auf den auf der Grundfläche abgestützten Elementen (2, 3) befestigt sind, und dass jeder eine der besagten Träger (1) einerseits aus einer geraden Stange besteht, derer Enden an den Enden der genannten geraden Ständer (2a, 4, 3a, 5) bei Erhaltung der besagten Möglichkeit einer winkeligen Verschwenkung angeschlossen sind, wobei andererseits jeder eine der genannten Träger (1) an dessen Enden die Elemente (6, 7) für die Positionierung und die Zentrierung beider Räder eines Fahrrads aufweist.

2. Vorrichtung nach Anspruch 1, dadurch gekennzeichnet, dass jedes Element (2-3) am wenigstens ein einziges, jedoch im allgemeinen mehrere senkrecht herausragenden Vertikalansatzstücke (2a-3a) aufweist, die in beliebiger Weise das Ineinandergreifen und die Zentrierung der Ständer (4-5) oder das freie Einfügen der Fahrradträger (1) gestatten.

3. Vorrichtung nach einem der Ansprüche 1 und 2, dadurch gekennzeichnet, dass die Elemente (2-3), die Ansatzstücke (2a-3a) und die Ständer (4-5) rohrförmig und insbesondere mit quadratischem oder annähernd quadratischem Querschnitt ausgeführt sind.

4. Vorrichtung nach einem der Ansprüche 1 bis 3, dadurch gekennzeichnet, dass jeder Träger (1) aus der Unterfläche eines rohrförmigen Elements (1a) die Zentrierungsfinger- oder Steine von abgerundetem Querschnitt aufweist, die für freies Einfügen in dem Hohlquerschnitt der Ständerpaare (4-5) oder der Ansatzstücke (2a-3a) vorgesehen sind.

5. Vorrichtung nach einem der Ansprüche 1 bis 4, dadurch gekennzeichnet, dass das rohrförmige Element (1a) des Trägers (1) an jedem einen dessen Enden verstellbare Abstützungsprofilierstücke (6 und 7) für die Positionierung und die Zentrierung der Räder des Fahrrads sowie einen höhenverstellbaren Vertikalarm (9) aufweist, dessen freies Ende eingerichtet ist, um das Abstützen und das Zentrieren des Unterteils des Rahmens zu ermöglichen.

6. Vorrichtung nach Anspruch 5, dadurch gekennzeichnet, dass der Arm (5) in der Quere und am Ende eine Abstützungsmulde (1d) für die Zentrierung des Kurbellagergehäuses aufweist, wobei der eine Schenkel der besagten Mulde einen Einteilungsfinger (10b) aufweist, der zum Einfügen zwischen den Wanten des Rahmens des Fahrrads für die winklige Positionierung desselben vorgesehen ist.

7. Vorrichtung nach Anspruch 5, dadurch gekennzeichnet, dass der Arm (9) in der Quere und am Ende eine Abstützungsmulde (14) aufweist, derer Querschnitt die Abstützung und die positionierte Zentrierung der Unterlagen des Rahmens gestattet.

8. Vorrichtung nach Anspruch 5, dadurch gekennzeichnet, dass der Arm (9) eine senkrechte, achsenartige Verlängerung (16) sowie eine waagrechte, kreuzförmige Stange (17) aufweist, wobei die Unterlagen des Rahmens sich beiderseitig des freien Oherendes (16') der senkrechten Verlängerung auf den Enden der waagrechten Stange abstützen.

9. Vorrichtung nach einem der Ansprüche 1 bis 8, dadurch gekennzeichnet, dass die Ständer (4 und 5) je zu zwei von unterschiedlicher Höhe sind, um ein gestaffeltes Präsentieren der Fahrräder zu ermöglichen.

10. Vorrichtung nach Anspruch 5, dadurch gekennzeichnet, dass das rohrförmige Element (1a) des Trägers (1) linear verstellbar ist und aus mehreren ineinanderschiebbaren Teilen besteht.

11. Vorrichtung nach einem der Ansprüche 1 bis 10, dadurch gekennzeichnet, dass die auf der Grundfläche abgestützten Elemente (2-3) am Ende oder auf ihrer Länge in verstellbarer Weise ein oder mehrere rohrförmige Profilierstücke (11) aufnehmen, die für einen Umfangsschutz am Unterteil der Vorrichtung ausgestaltet sind.

0 101 393

FIG.1

FIG.4

FIG.5

FIG.6

FIG.2 · FIG.3 · FIG.7 · FIG.8 · FIG.9